# EUROPÄISCHE PATENTSCHRIFT

(11) **EP 3 353 415 B1**
(45) Veröffentlichungstag und Bekanntmachung des Hinweises auf die Patenterteilung: **13.01.2021**
(21) Anmeldenummer: 16741647.8
(22) Anmeldetag: 25.07.2016
(51) Int. Cl.: F02M 65/00, G01M 15/02, F04B 51/00

(54) **INJEKTORPRÜFVORRICHTUNG**
INJECTOR TEST DEVICE
DISPOSITIF DE CONTRÔLE D'INJECTEUR

(30) Priorität: 21.09.2015 DE 102015218090
(43) Veröffentlichungstag der Anmeldung: 01.08.2018
(73) Patentinhaber: Robert Bosch GmbH, 70442 Stuttgart (DE)
(72) Erfinder: BATHA, Armin, 73773 Aichwald (DE); HOSS, Reinhard, 73207 Plochingen (DE); STRACK, Daniel, 73066 Uhingen (DE)
(86) Internationale Anmeldenummer: PCT/EP2016/067662
(87) Internationale Veröffentlichungsnummer: WO 2017/050461

(56) Entgegenhaltungen:
- WO-A1-2007/049038
- CN-A- 1 975 148
- CN-A- 101 004 161
- CN-U- 202 510 269
- DE-A1- 10 232 301
- DE-A1-102010 038 760
- DE-A1-102011 075 485
- KR-A- 20090 020 904
- KR-A- 20090 020 916

## Beschreibung

Die Erfindung betriffft eine Injektorprüfvorrichtung.

Zum Prüfen von Injektoren in einer Injektorprüfvorrichtung wird ein Prüföl von einer Hochdruckpumpe auf den benötigten Druck gebracht. Dazu wird die Hochdruckpumpe ("Common Rail Pumpe") von einem Antriebsmotor angetrieben. Antriebsmotor und Hochdruckpumpe sind in der Regel auf Gummipuffern elastisch gelagert, um die im Betrieb entstehenden Schwingungen zu dämpfen. Zur Weiterleitung des unter hohem Druck stehenden Prüföls ist die Hochdruckpumpe mit einem Druckspeicher bzw. Hochdruckrail verbunden.

Die Dokumente CN 1 975 148 A und DE 10 2010 038760 A1 zeigen Beispiele einer Injektorprüfvorrichtung.

Da sich die Hochdruckpumpe aufgrund der elastischen Lagerung im Betrieb gegenüber dem Druckspeicher bzw. Hochdruckrail bewegt, muss diese Verbindung flexibel, z.B. in Form eines ein Hochdruckschlauchs ausgebildet werden. Insbesondere können aufgrund der im Betrieb auftretenden Bewegungen hierfür keine Stahlleitungen verwendet werden.

Hochdruckschläuche haben im Vergleich zu Stahlleitungen höhere Kosten und unterliegen einem höheren Verschleiß. Es ist daher wünschenswert, eine verbesserte Injektorprüfvorrichtung bereit zu stellen, die eine kostengünstige und verschleißarme Fluidverbindung zwischen der Hochdruckpumpe und dem Druckspeicher bzw. Hochdruckrail ermöglicht.

Gemäß einem Ausführungsbeispiel der Erfindung umfasst eine Injektorprüfvorrichtung: eine Fluidpumpe, die ausgebildet ist, ein Prüföl zu fördern; einen Motor, der mechanisch mit der Fluidpumpe verbunden und ausgebildet ist, die Fluidpumpe anzutreiben; und ein Rail, das zur Aufnahme des von der Fluidpumpe geförderten Prüföls und zur Fluidverbindung mit wenigstens einem zu prüfenden Injektor ausgebildet ist. Die Fluidpumpe, der Motor und das Rail sind als gemeinsame Baugruppe elastisch in der Injektorprüfvorrichtung gelagert.

Dadurch, dass die Fluidpumpe und das Rail als gemeinsame Baugruppe elastisch in der Injektorprüfvorrichtung gelagert sind, treten auch im Betrieb keine Relativbewegungen zwischen der Fluidpumpe und dem Rail auf. Es können daher starre Fluidleitungen, insbesondere Stahlleitungen, verwendet werden, um die Fluidpumpe mit dem Rail zu verbinden.

Solche starren Fluidleitungen sind kostengünstiger als flexible Hochdruckschläuche und weisen einen geringeren Verschleiß auf. Eine Injektorprüfvorrichtung gemäß einem Ausführungsbeispiel der Erfindung kann daher kostengünstig hergestellt und zuverlässig betrieben werden.

In einer Ausführungsform umfasst die Baugruppe einen Rahmen und/oder eine Wanne, insbesondere eine Ölwanne, wobei der Rahmen bzw. die Wanne elastisch an einem Gestell der Injektorprüfvorrichtung gelagert ist. Mit Hilfe eines Rahmens und/oder einer Wanne können das Rail, der Motor und die Pumpe besonders effektiv gemeinsam elastisch gelagert werden.

In einer Ausführungsform ist die gemeinsame Baugruppe durch wenigstens einen Puffer, insbesondere durch wenigstens einen Gummipuffer, elastisch in der Injektorprüfvorrichtung gelagert. Elastische Puffer, insbesondere Gummipuffer, stellen ein besonders geeignetes, kostengünstiges und einfach zu installierendes Mittel zur elastischen Lagerung dar.

In einer Ausführungsform ist das Rail mit wenigstens einem Anschlussstutzen zum Anschließen wenigstens eines zu prüfenden Injektors ausgebildet. Auf diese Weise kann ein zu prüfender Injektor besonders einfach und effektiv mit dem Rail verbunden werden.

In einer Ausführungsform ist das Rail schwenkbar in der Injektorprüfvorrichtung gelagert, so dass das Rail besonders einfach auf die Geometrie eines zu prüfenden Injektors ausgerichtet werden kann. Auf diese Weise kann auf eine flexible Fluidverbindung, insbesondere einen Schlauch, zwischen dem Rail und dem Injektor verzichtet werden.

In einer Ausführungsform umfasst die elastisch gelagerte Baugruppe zusätzlich wenigstens eine Injektor-Halterung, die zu Aufnahme wenigstens eines zu prüfenden Injektors ausgebildet ist. Dadurch können Relativbewegungen zwischen dem Rail und dem zu prüfenden Injektor vermieden werden, und auf eine flexible Fluidverbindung (z.B. einen Schlauch) zwischen dem Rail und dem Injektor kann verzichtet werden.

In einer Ausführungsform ist die wenigstens eine Injektor-Halterung in wenigstens einer Richtung, insbesondere in allen drei Raumrichtungen, verschiebbar, so dass ein zu prüfender Injektor optimal auf den Anschlussstutzen des Rails ausgerichtet werden kann, um auf eine flexible Fluidverbindung (z.B. einen Schlauch) zwischen dem Rail und dem Injektor verzichten zu können.

In einer Ausführungsform umfasst die wenigstens eine Injektor-Halterung eine Klemmvorrichtung zum Festklemmen eines Injektors. Durch eine Klemmvorrichtung kann ein zu prüfender Injektor schnell, sicher und effektiv in der Aufspannvorrichtung fixiert werden.

In einer Ausführungsform umfasst die wenigstens eine Injektor-Halterung eine Spindel, einen Konus und einen Klemmring, die ausgebildet sind, derart zusammenzuwirken, dass der Klemmring durch Drehen der Spindel aufweitbar ist, um die Injektor-Halterung verspannungsfrei in dem Tragrahmen, insbesondere in einem Rohr des Tragrahmens, zu fixieren.

In einer Ausführungsform ist zwischen dem Ausgang der Fluidpumpe und dem Rail ein Fluidadapter angeordnet, dessen Ausgangsseite gegenüber seiner Eingangsseite verdrehbar ist. Mit Hilfe eines solchen Fluidadapters kann auch mit starren Fluidleitungen eine rotierbare Fluidverbindung zwischen der Fluidpumpe und dem Rail realisiert werden.

### Kurze Beschreibung der Figuren:

Figur 1 zeigt eine perspektivische Frontansicht einer Injektorprüfvorrichtung mit einer Baugruppe gemäß einem Ausführungsbeispiel der Erfindung.
Figuren 2a und 2b zeigen perspektivische Ansichten der funktionalen Elemente der in Figur 1 gezeigten Injektorprüfvorrichtung aus zwei verschiedenen Winkeln.
Figuren 3a bis 3c zeigen verschiedene Ansichten einer Injektor-Halterung, wie sie in einem Ausführungsbeispiel der Erfindung einsetzbar ist, mit einem darin eingeklemmtem Injektor.
Figur 4 zeigt eine perspektivische Frontansicht einer Baugruppe gemäß einem weiteren Ausführungsbeispiel der Erfindung.

### Figurenbeschreibung:

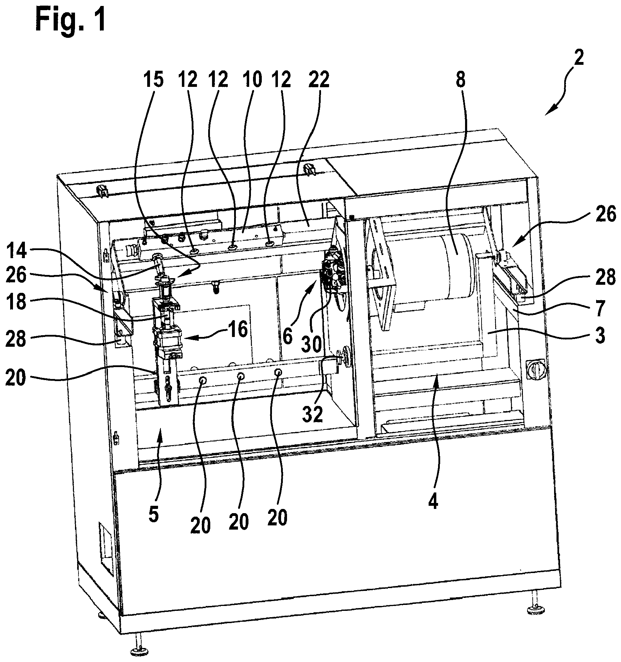

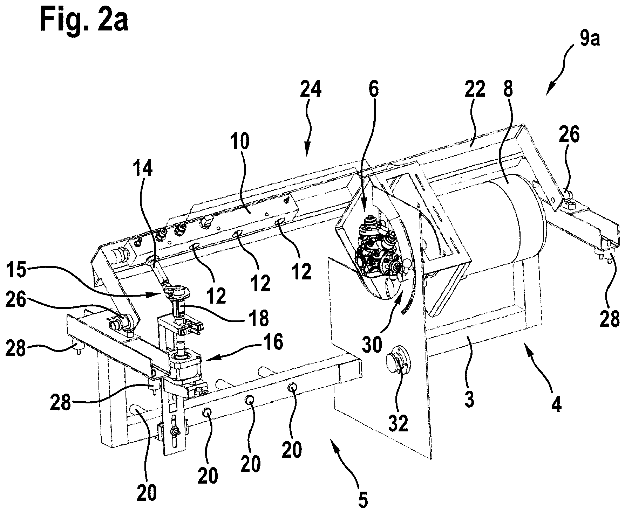

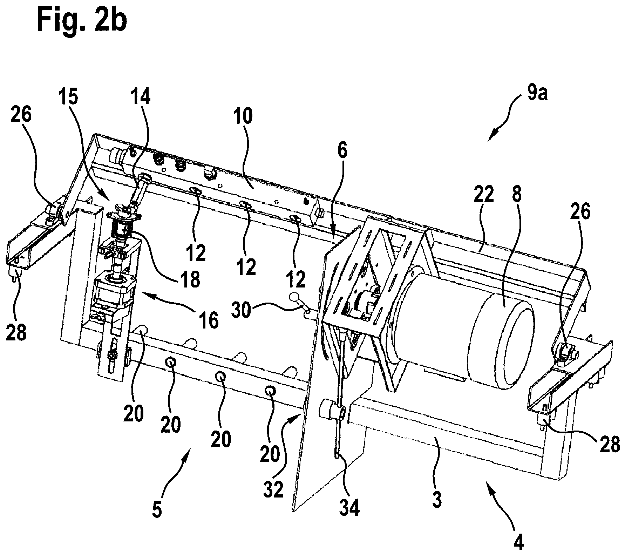

Figur 1 zeigt eine perspektivische Frontansicht einer Injektorprüfvorrichtung 2 mit einer Baugruppe 9a gemäß einem Ausführungsbeispiel der Erfindung. Die Figuren 2a und 2b zeigen perspektivische Ansichten der Baugruppe 9a, welche die funktionalen Elemente der Injektorprüfvorrichtung 2 umfasst, aus zwei verschiedenen Winkeln.

Die Injektorprüfvorrichtung 2 umfasst einen in den Figur 1, 2a und 2b jeweils rechts dargestellten Druckerzeugungsbereich 4 und einen jeweils links dargestellten Prüfbereich 5.

Die Injektorprüfvorrichtung 2 hat einen Tragrahmen 3, der eine Fluidpumpe (Hochdruckpumpe) 6 und einen zum Antreiben der Fluidpumpe 6 ausgebildeten Motor 8 trägt.

Ein schwenkbarer Rahmen 22 ist durch zwei Stehlager 26 derart auf dem Tragrahmen 3 abgestützt, dass er um eine horizontale Achse schwenkbar ist. Dies ermöglicht es, den schwenkbaren Rahmen 22 in einem beliebigen Winkel um die horizontale Achse von der Horizontalen bis in die Lotrechte einzustellen. Der schwenkbare Rahmen 22 kann mittels eines Klemmhebels 30 in jeder gewünschten Position fixiert werden. Alternativ oder zusätzlich kann die gewünschte Position gesichert werden, indem eine Zahn- oder Gewindestange 34, die am schwenkbaren Rahmen 3 befestigt ist, in einem Betätigungsknopf 32 eingerastet wird.

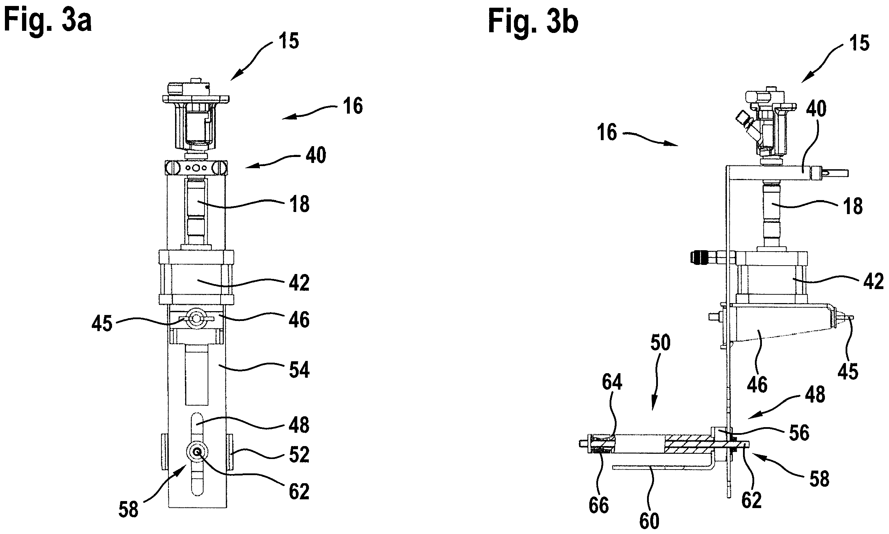

Der schwenkbare Rahmen 22 trägt einen in Form eines Rails 10 ausgebildeten Hochdruckspeicher, der durch mehrere Fluidleitungen 24 mit der Ausgangsseite der Fluidpumpe 6 verbunden und zur Aufnahme des von der Fluidpumpe 6 geförderten Fluids ausgebildet ist. Das Rail 10 weist mehrere Öffnungen 12 auf, die jeweils zur Aufnahme eines Anschlussstutzens 14 ausgebildet sind. Über einen solchen Anschlussstutzen 14 ist das Rail 10 mit einem zur prüfenden Injektor 18 ("Prüfling") verbunden. Der Injektor 18 wird dabei von einer Injektor-Halterung (Injektor-Aufspannvorrichtung) 16 gehalten, die über ein Rohr 20, das sich von dem Tragrahmen 3 ausgehend erstreckt, an dem Tragrahmen 3 abgestützt ist. Die Einzelheiten der Injektor-Halterung 16 werden weiter unten unter Bezugnahme auf die Figuren 3a bis 3c beschrieben.

Durch Schwenken des Schwenkrahmens 22 ist der Winkel des am Rail 10 angebrachten Anschlussstutzens 14 so einstellbar, dass der Anschlussstutzen 14 in einer Linie mit dem Druckrohrstutzen des Injektors 18 ausgerichtet ist. Die Position des Injektors 18 in Bezug auf das Rail 10 kann durch Verstellen der Injektor-Halterung 16 (s.u.) so eingestellt werden, dass der Anschlussstutzen 14 direkt mit dem Druckrohrstutzen des Injektors 18 verbunden werden kann. Auf eine verschleißanfällige flexible Fluidverbindung, z.B. in Form eines Schlauches, zwischen dem Rail 10 und dem Injektor 18 kann daher verzichtet werden.

Der Tragrahmen 3 bildet gemeinsam mit dem Schwenkrahmen 22, dem Motor 8, der Hochdruckpumpe 6 und der Injektor-Halterung 16 eine Baugruppe 9a. Die Baugruppe 9a ist durch elastische Puffer 28, die auf der Unterseite des Tragrahmens 3 angeordnet sind, schwimmend auf einem Gestell 5 der Injektorprüfvorrichtung 2 gelagert. Auf diese Weise werden Schwingungen, die beim Betrieb des Motors 8 und der Fluidpumpe 6 entstehen, nicht oder nur gedämpft auf das Gestell 5 übertragen.

Da die Fluidpumpe 6 mit ihrem Motor 8, das Rail 10 und jeder in einer Injektor-Halterung 16 angeordnete Injektor 18 gemeinsam schwimmend gelagert sind, treten zwischen diesen Bauteilen auch beim Betrieb der Fluidpumpe 6 keine Relativbewegungen auf. Die Fluidpumpe 6 und das Rail 10 können daher durch starre Fluidleitungen 24, die insbesondere aus Stahl ausgebildet sein können, miteinander verbunden werden. Auf den Einsatz verschleißanfälliger flexibler Hochdruckschläuche kann verzichtet werden.

Durch Verwenden starrer Fluidleitungen 24, die insbesondere aus Stahl ausgebildet sind, können die Herstellungs- und Wartungskosten gesenkt werden, und die Betriebssicherheit der Injektorprüfvorrichtung 2 kann erhöht werden.

Die Figuren 3a bis 3c zeigen verschiedene Ansichten der Injektor-Halterung 16 mit einem darin eingeklemmtem Injektor 18.

Der Injektor 18 wird durch eine Klemmvorrichtung 40 in der Injektor-Halterung 16 fixiert. Die Einspritzkammer 42 wird durch Verschieben einer verstellbaren Platte 46 über der (in den Figuren 3a bis 3c nicht sichtbare) Düse des Injektors 18 positioniert und durch Anziehen einer Klemmschraube 45 in dieser Position fixiert.

Über eine teilbare Überwurfmutter 15 am Anschlussstutzen 14 wird der Hochdruckanschluss des Injektors 18 mit dem Rail 10 verbunden.

Durch Schwenken des schwenkbaren Rahmens 22 um die horizontale Achse wird die Injektor-Halterung 16 zuvor dem Anschlussstutzen 14 entsprechend ausgerichtet.

Durch ein Langloch 48, das in einem Träger 54 der Injektor-Halterung 16 ausgebildet ist, kann die Höhe des Injektors 18 verändert und bedarfsgemäß eingestellt werden. Seitliches Spiel im Langloch 48 ermöglicht einen seitlichen Versatz.

Durch Verschieben eines Bolzens 50 in einem Rohr 20 des Tragrahmens 4 (siehe Fig. 2a) kann die Injektor-Halterung 16 vor- und zurück bewegt werden.

Die seitliche Neigung der Injektor-Halterung 16 kann durch den Abstand zwischen einer seitlicher Führung 52 und dem Träger 54 der Injektor-Halterung 16 eingestellt werden.

Die Vor-/ Rückwärtsneigung des Injektors 18 ist über abgerundete Auflagen 56 und die Neigung ausgleichenden Elemente 58, z.B. eine Kombination aus Kugelscheibe und Kegelpfanne, einstellbar.

Über den Bolzen 50 im Rohr 20 des Tragrahmens 3 wird die Injektor-Halterung 16 geführt. Eine Lasche 60 verhindert eine Verdrehung.

Durch Drehen einer Spindel 62, deren Griff in den Figuren nicht gezeigt ist, wird ein Konus 64 so herangezogen, dass er einen Klemmring 66 aufweitet. Der Klemmring 66 verspannt sich dadurch im Rohr 20 des Tragrahmens 3 und ermöglicht es auf diese Weise, die Position der Injektor-Halterung 16 verspannungsfrei zu fixieren.

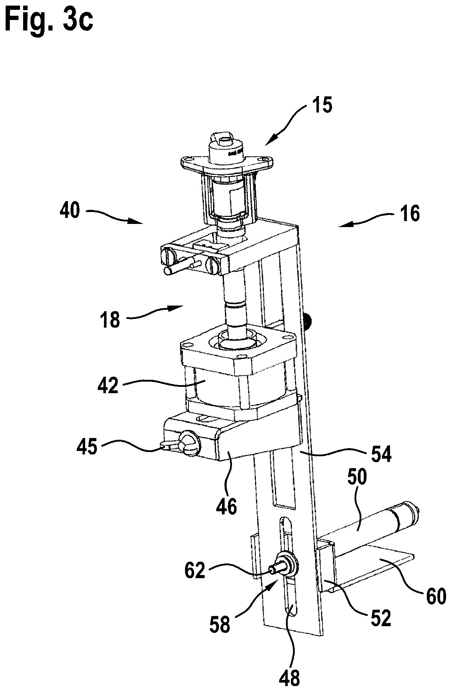

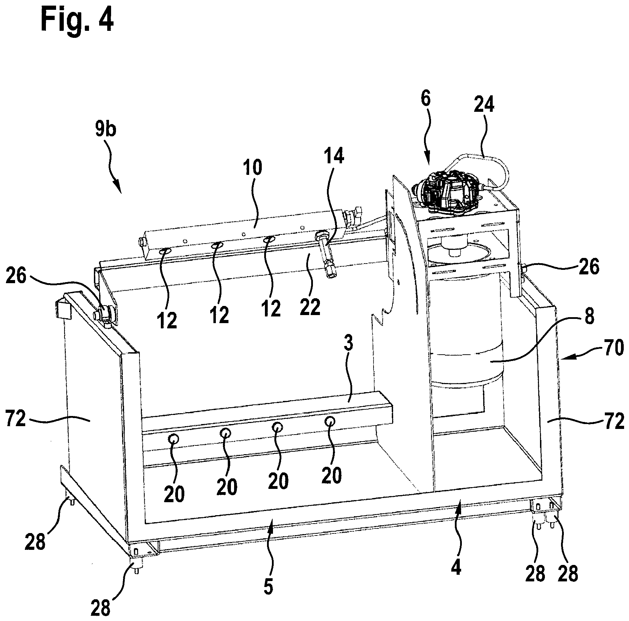

Figur 4 zeigt ein alternatives Ausführungsbeispiel einer Baugruppe 9b. In diesem Ausführungsbeispiel umfasst die Baugruppe 9b eine Ölwanne 70 mit hochgezogenen Seitenteilen 72, die zur Aufnahme der Stehlager 26 des schwenkbaren Rahmens 22 ausgebildet sind. In dem in der Figur 3 gezeigten Ausführungsbeispiel ist die komplette Ölwanne 70 durch Puffer 28 elastisch gelagert.

Anders als in dem in den Figuren 1, 2a und 2b gezeigten Ausführungsbeispiel ist die Rotationsachse des Motors 8 in diesem Fall nicht parallel, sondern rechtwinklig zu Schwenkachse des schwenkbaren Rahmens 22 ausgerichtet. Bei dieser Konstruktion verändert sich daher beim Schwenken des schwenkbaren Rahmens 22 auch die Ausrichtung der Rotationsachse des Motors 8 im Raum.

In einem weiteren, nicht in den Figuren gezeigten Ausführungsbeispiel werden die Fluidpumpe 6 und der Motor 8 am nicht-schwenkbaren, feststehenden Bereich der Vorrichtung 2 angebracht. Um auch in diesem Fall an Stelle flexibler Schläuche starre Fluidleitungen 24 für die Fluidversorgung verwenden zu können, wird ein Fluidadapter 80 in der Drehachse positioniert.

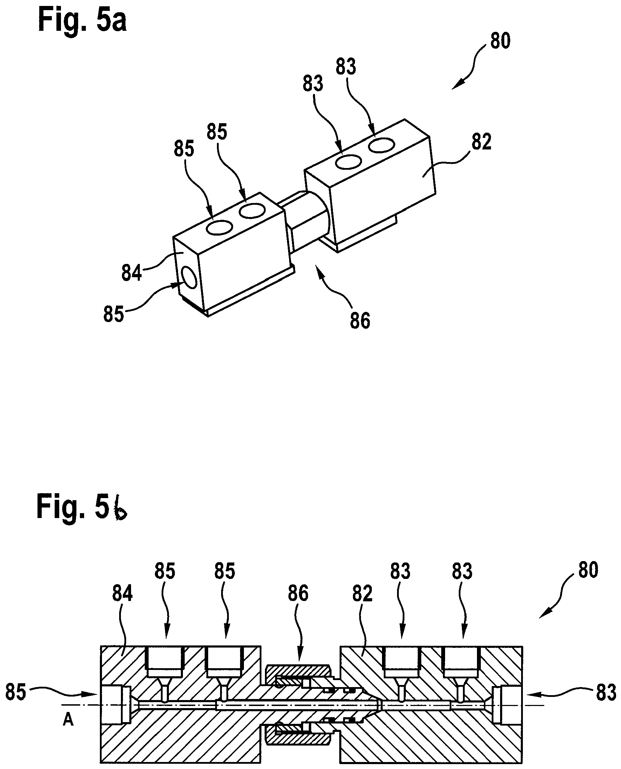

Figur 5a zeigt eine perspektivische Ansicht eines Ausführungsbeispiels eines solchen Fluidadapters 80, und Figur 5b zeigt einen Schnitt durch den Fluidadapter 80.

Der Fluidadapter 80 hat ein eingangsseitiges Element 82 und ein ausgangsseitiges Element 84, das so mit dem eingangsseitigen Element 82 verbunden ist, dass es gegenüber dem eingangsseitigen Element 82 um eine Achse A drehbar ist. Sowohl das eingangsseitige Element 82 als auch das ausgangsseitige Element 84 weisen jeweils wenigstens einen Fluidanschluss 83, 85 auf, der es ermöglicht, sowohl eingangsseitig als auch ausgangsseitig Fluidleitungen 24 an den Fluidadapter 80 anzuschließen. Die Verbindung 86 zwischen dem eingangsseitigen Element 82 und dem ausgangsseitigen Element 84 ist auch bei hohem Fluiddruck dicht.

Das eingangsseitige Element 82 des Fluidadapters 80 wird mit dem Ausgang der Fluidpumpe 6 verbunden. Das ausgangsseitige Element 84 des Fluidadapters 80 wird mit dem Rail 10 verbunden. Da das ausgangsseitige Element 84 gegenüber dem eingangsseitigen Element 82 verdrehbar ist, kann eine drehbare Fluidverbindung zwischen der Fluidpumpe 6 und dem Rail 10 auch mit starren Fluidleitungen 24, beispielsweise aus Stahl, realisiert werden.

## Patentansprüche

1. Injektorprüfvorrichtung (2) mit
einer Fluidpumpe (6), die ausgebildet ist, ein Prüföl zu fördern;
einem Motor (8), der mechanisch mit der Fluidpumpe (6) verbunden und ausgebildet ist, die Fluidpumpe (6) anzutreiben; und
einem Rail (10), das zur Aufnahme des von der Fluidpumpe (6) geförderten Prüföls und zur Fluidverbindung mit wenigstens einem zu prüfenden Injektor (18) ausgebildet ist;
**dadurch gekennzeichnet, dass** die Fluidpumpe (6), der Motor (8) und das Rail (10) als gemeinsame Baugruppe (9a; 9b) auf wenigstens einem Puffer (28) elastisch in der Injektorprüfvorrichtung (2) gelagert sind, wobei die Baugruppe (9a; 9b) einen Rahmen (3) und/oder eine Wanne (70) umfasst, der/die elastisch in einem Gestell der Injektorprüfvorrichtung (2) gelagert ist, so dass zwischen diesen Bauteilen auch beim Betrieb der Fluidpumpe (6) keine Relativbewegungen auftreten.

2. Injektorprüfvorrichtung (2) nach Anspruch 1,
wobei das Rail (10) mit wenigstens einem Anschlussstutzen zum Anschließen wenigstens eines zu prüfenden Injektors (18) ausgebildet ist.

3. Injektorprüfvorrichtung (2) nach einem der vorangehenden Ansprüche, wobei das Rail (10) schwenkbar in der Injektorprüfvorrichtung (2) gelagert ist.

4. Injektorprüfvorrichtung (2) nach einem der vorangehenden Ansprüche, wobei die Baugruppe (9a; 9b) zusätzlich wenigstens eine Injektor-Halterung (16) zu Aufnahme wenigstens eines zu prüfenden Injektors (18) umfasst.

5. Injektorprüfvorrichtung (2) nach Anspruch 4, wobei die wenigstens eine Injektor-Halterung (16) in wenigstens einer Richtung, insbesondere in allen drei Raumrichtungen, verschiebbar ist.

6. Injektorprüfvorrichtung (2) nach Anspruch 4 oder 5, wobei die wenigstens eine Injektor-Halterung (16) eine Klemmvorrichtung (40) zum Festklemmen eines Injektors (18) umfasst.

7. Injektorprüfvorrichtung (2) nach einem der Ansprüche 4 bis 6, wobei die wenigstens eine Injektor-Halterung (16) eine Spindel (62), einen Konus (64) und einen Klemmring (66) umfasst, die derart ausgebildet sind, dass der Klemmring (66) durch Drehen der Spindel (62) aufweitbar ist, um die Injektor-Halterung (16) verspannungsfrei in der Injektorprüfvorrichtung (2) zu fixieren.

8. Injektorprüfvorrichtung (2) nach einem der vorangehenden Ansprüche, wobei zwischen dem Ausgang der Fluidpumpe (6) und dem Rail (10) ein Fluidadapter (80) angeordnet ist, dessen Ausgangsseite (84) gegenüber seiner Eingangsseite (82) drehbar ist.

## Claims

1. Injector test device (2) having
a fluid pump (6) which is designed to convey a test oil;
a motor (8) which is mechanically connected to the fluid pump (6) and is designed to drive the fluid pump (6); and
a rail (10) which is designed to receive the test oil conveyed by the fluid pump (6) and to establish a fluidic connection to the at least one injector (18) for testing;
**characterized in that** the fluid pump (6), the motor (8) and the rail (10) are mounted as a common assembly (9a; 9b) in the injector test device (2) in elastic fashion on at least one buffer (28), wherein the assembly (9a; 9b) comprises a frame (3) and/or a trough (70) which is mounted elastically in a rack of the injector test device (2) such that no relative movements can occur between said components even during operation of the fluid pump (6).

2. Injector test device (2) according to Claim 1, wherein the rail (10) is formed with at least one connector piece for the connection of at least one injector (18) for testing.

3. Injector test device (2) according to any of the preceding claims, wherein the rail (10) is mounted pivotably in the injector test device (2).

4. Injector test device (2) according to any of the preceding claims, wherein the assembly (9a; 9b) additionally comprises at least one injector holder (16) for receiving at least one injector (18) for testing.

5. Injector test device (2) according to Claim 4, wherein the at least one injector holder (16) is displaceable in at least one direction, in particular in all three spatial directions.

6. Injector test device (2) according to Claim 4 or 5, wherein the at least one injector holder (16) comprises a clamping device (40) for fixedly clamping an injector (18) .

7. Injector test device (2) according to any of Claims 4 to 6, wherein the at least one injector holder (16) comprises a spindle (62), a cone (64) and a clamping ring (66) which are designed such that the clamping ring (66) can, as a result of rotation of the spindle (62), be expanded in order to fix the injector holder (16) in a distortion-free manner in the injector test device (2).

8. Injector test device (2) according to any of the preceding claims, wherein, between the outlet of the fluid pump (6) and the rail (10), there is arranged a fluid adapter (80), the outlet side (84) of which fluid adapter is rotatable relative to the input side (82) of said fluid adapter.

## Revendications

1. Dispositif de contrôle d'injecteur (2), comprenant
une pompe à fluide (6) qui est réalisée pour refouler de l'huile de contrôle ;
un moteur (8) qui est relié mécaniquement à la pompe à fluide (6) et réalisé pour entraîner la pompe à fluide (6) ; et
une rampe (10) qui est réalisée pour recevoir l'huile de contrôle refoulée par la pompe à fluide (6) et pour établir une liaison fluidique avec au moins un injecteur (18) à contrôler ;
**caractérisé en ce que** la pompe à fluide (6), le moteur (8) et la rampe (10) sont montés de manière élastique sous la forme d'un sous-ensemble commun (9a ; 9b) sur au moins un tampon (28) dans le dispositif de contrôle d'injecteur (2), le sous-ensemble (9a ; 9b) comprenant un cadre (3) et/ou une cuve (70) qui est monté (e) de manière élastique dans un bâti du dispositif de contrôle d'injecteur (2) de sorte qu'aucun mouvement relatif n'apparaît entre ces composants même en cours de fonctionnement de la pompe à fluide (6).

2. Dispositif de contrôle d'injecteur (2) selon la revendication 1, dans lequel la rampe (10) est réalisée avec au moins un tube de raccordement pour raccorder au moins un injecteur à contrôler (18).

3. Dispositif de contrôle d'injecteur (2) selon l'une quelconque des revendications précédentes, dans lequel la rampe (10) est montée pivotante dans le dispositif de contrôle d'injecteur (2).

4. Dispositif de contrôle d'injecteur (2) selon l'une quelconque des revendications précédentes, dans lequel le sous-ensemble (9a ; 9b) comprend de plus au moins un support d'injecteur (16) pour recevoir au moins un injecteur (18) à contrôler.

5. Dispositif de contrôle d'injecteur (2) selon la revendication 4, dans lequel ledit au moins un support d'injecteur (16) peut être orienté dans au moins une direction, en particulier dans l'ensemble des trois directions spatiales.

6. Dispositif de contrôle d'injecteur (2) selon la revendication 4 ou 5, dans lequel ledit au moins un support d'injecteur (16) comprend un dispositif de serrage (40) pour serrer un injecteur (18).

7. Dispositif de contrôle d'injecteur (2) selon l'une quelconque des revendications 4 à 6, dans lequel ledit au moins un support d'injecteur (16) comprend une broche (62), un cône (64) et une bague de serrage (66) qui sont réalisés de telle sorte que la bague de serrage (66) peut être élargie par une rotation de la broche (62) afin de fixer le support d'injecteur (16) sans contrainte dans le dispositif de contrôle d'injecteur (2).

8. Dispositif de contrôle d'injecteur (2) selon l'une quelconque des revendications précédentes, dans lequel entre la sortie de la pompe à fluide (6) et la rampe (10) est disposé un adaptateur de fluide (80) dont le côté sortie (84) est pivotant par rapport à son côté entrée (82).
